**Europäisches Patentamt**

**European Patent Office**

**Office européen des brevets**

(19)

(11) Veröffentlichungsnummer: **0 188 173**
**B1**

(12)

## EUROPÄISCHE PATENTSCHRIFT

(45) Veröffentlichungstag der Patentschrift:
04.01.89

(51) Int. Cl.⁴: **F 16 B 13/10**

(21) Anmeldenummer: **85810535.6**

(22) Anmeldetag: **13.11.85**

(54) Spreizdübel mit Spreizhülse und keilförmigem Spreizelement.

(30) Priorität: 17.12.84 DE 3445963

(73) Patentinhaber: **HILTI Aktiengesellschaft, FL- 9494 Schaan (LI)**

(43) Veröffentlichungstag der Anmeldung:
23.07.86 Patentblatt 86/30

(72) Erfinder: **Herb, Armin, Lärchenstrasse 9, D-8123 Peissenberg (DE)**

(45) Bekanntmachung des Hinweises auf die Patenterteilung:
04.01.89 Patentblatt 89/1

(74) Vertreter: **Wildi, Roland, Hilti Aktiengesellschaft Patentabteilung, FL- 9490 Schaan (LI)**

(84) Benannte Vertragsstaaten:
**AT BE CH DE FR GB IT LI NL SE**

(56) Entgegenhaltungen:
DE-A-3 220 483
FR-A-2 175 866
FR-A-2 266 039
FR-A-2 362 298
GB-A-1 321 479

EP 0 188 173 B1

## Beschreibung

Die Erfindung betrifft einen Spreizdübel mit zylindrischer, aus einem Blechstreifen gewickelter Spreizhülse, die an ihrem rückwärtigen Endbereich mit Mitteln zur Lastaufnahme versehen ist und der Mantel der Spreizhülse wenigstens einen in Dübellängsrichtung verlaufenden, sich zum vorderen Ende hin verengenden Längsschlitz für ein entsprechend keilförmig verjüngt ausgebildetes Spreizelement aufweist, das sich seitlich an den Flanken des Längsschlitzes abstützt und eine in das Innere der Spreizhülse ragende Anschlagnase aufweist.

Spreizdübel der obengenannten Art werden hauptsächlich im mittleren und unteren Lastbereich eingesetzt und werden vorzugsweise aus Blech durch Stanz- und Rollvorgänge hergestellt. Diese Dübel entsprechen somit den heute an sie gestellten Anforderungen bezüglich Beständigkeit im Brandfall und werden daher in zunehmendem Masse anstelle der bisher üblichen Kunststoffdübel eingesetzt. Aufgrund der daraus resultierenden Massenanwendung stehen diese Dübel daher unter einem erheblichen Kostendruck. Ein weiterer Vorteil der meisten dieser Dübel gegenüber Kunststoffdübeln besteht darin, dass sie ein Nachspreizverhalten aufweisen.

Ein bekannter Metallspreizdübel (DE-A-2 657 353) besteht aus einer Spreizhülse mit einem sich zum vorderen Ende hin verengenden Längsschlitz für ein entsprechend keilförmig verjüngt ausgebildetes Spreizelement. Die Spreizhülse und das Spreizelement werden separat hergestellt, müssen anschliessend zusammenmontiert und bis zum Einsetzen des Dübels in ein Bohrloch durch separate Mittel lösbar miteinander verbunden werden. Diese Herstellung führt zu hohen Fertigungskosten und verteuert die Dübel gegenüber vergleichbaren Kunststoffdübeln wesentlich.

Ein weiterer bekannter Spreizdübel (FR-A-2 266 039) besteht aus zwei sich aneinander abstützenden Schafthälften. Im Ausgangszustand sind die Schafthälften gegeneinander axial versetzt und ergänzen sich zu einem Kreisquerschnitt. Die Schafthälften sind in diesem Zustand durch einen zerstörbaren Solltrennsteg miteinander verbunden. Nach dem Einsetzen des Spreizdübels in ein Bohrloch, wird durch Vortreiben des die eine Schafthälfte rückwärtig überragenden Teils zunächst der Solltrennsteg zerstört und anschliessend der Spreizdübel im Bohrloch verspreizt. Diese Verspreizung erfolgt lediglich nach zwei einander entgegengesetzten Seiten.

Der Erfindung liegt die Aufgabe zugrunde, einen die geschilderten Vorteile gegenüber Kunststoffdübeln aufweisenden Metallspreizdübel zu schaffen, der zudem wirtschaftlich herstellbar sowie einfach und sicher in der Anwendung ist.

Gemäss der Erfindung wird die Aufgabe dadurch gelöst, dass das Spreizelement aus dem Blechstreifen einstückig mit dem Mantel der Spreizhülse geformt und über einen als Solltrennstelle ausgebildeten Trennsteg mit dem Mantel verbunden ist.

Der Trennsteg verbindet das Spreizelement mit der Spreizhülse bis zum Beginn des Spreizvorganges, wobei die Festigkeit des Trennsteges gering sein kann, da er beim Setzvorgang für das zur Spreizung des Dübels erforderliche axiale Verschieben vom Anwender zerstört werden muss. Die Spreizhülse und das Spreizelement können im gleichen Arbeitsgang und aus demselben Material ausgestanzt werden. Dabei kann neben Arbeitszeit auch Material eingespart werden, da der Anteil der Stanzabfälle verringert werden kann. Bedeutende Vereinfachungen entstehen auch bei der Weiterverarbeitung des ausgestanzten Rohlings. Beispielsweise kann gleichzeitig die Spreizhülse gerollt und das Spreizelement entsprechend profiliert werden. Ein allfälliges Aufbringen eines Oberflächenschutzes kann ebenfalls im gleichen Arbeitsgang erfolgen.

Der Trennsteg kann im Prinzip an verschiedenen Stellen des Spreizelementes angeordnet werden. Insbesondere für die beim Setzvorgang erfolgende Zerstörung des Trennsteges ist es vorteilhaft, den Trennsteg im Bereich der Flanken des Längsschlitzes anzuordnen. Durch dieses seitliche Anordnen des Trennsteges wird dieser beim Abtrennen des Spreizelementes von der Spreizhülse abgeschert. Die für das Abscheren des Trennsteges erforderlichen Kräfte lassen sich relativ genau bestimmen. Somit kann auch der Trennsteg so dimensioniert werden, dass die für das Zerstören des Trennsteges erforderliche Kraft innerhalb eines vorgegebenen Bereiches liegt.

Um beim Zerstören des Trennsteges ein Schrägstellen des Spreizelementes zu vermeiden, ist es zweckmässig, den Trennsteg im rückwärtigen Stirnbereich des Spreizelementes anzuordnen. Der Trennsteg kann dabei beispielsweise als örtliche Materialschwächung ausgebildet werden. Je nach Verlauf des Trennsteges kann dieser abgeschert oder durch Zugbelastung abgerissen werden.

Der erforderliche Abreiss- bzw. Abscherquerschnitt kann auch auf mehrere im rückwärtigen Stirnbereich des Spreizelementes angeordnete Trennstege verteilt werden.

Bei der Herstellung des Dübels wird dieser vorzugsweise aus einem ebenen Blech ausgestanzt und anschliessend zu einer Hülse gerollt. Dabei wird auch das Spreizelement im Querschnitt entsprechend dem Radius der Spreizhülse gewölbt. Um dies zu erleichtern, erstreckt sich vorteilhafterweise der Trennsteg in Umfangsrichtung entlang der rückwärtigen Stirnseite des Spreizelementes. Der Querschnitt des Trennsteges kann sich über die ganze rückwärtige Stirnseite des Spreizelementes erstrecken oder durch geeignete Massnahmen wie Durchtrittsöffnungen, Vertiefungen oder dergleichen reduziert werden.

Eine zweckmässige Ausführung besteht darin, dass die Abmessung der den Trennsteg aufweisenden rückwärtigen Stirnseite des Spreizelementes in Umfangsrichtung geringer ist als die sich in axialem Abstand am rückwärtigen Ende der keilförmigen Verjüngung befindliche Abmessung in Umfangsrichtung. Dies bedeutet, dass sich die breiteste Stelle des Spreizelementes nicht an dessen rückwärtigem Ende, sondern etwa in einem mittleren Bereich des Spreizelementes befindet. Beispielsweise knnn sich das Spreizelement von der breitesten Stelle auch zum rückwärtigen Ende hin keilförmig verjüngen. Eine solche Ausbildung des Spreizelementes ermöglicht es, auch die Breite der Ausnehmung in der Spreizhülse zum rückwärtigen Ende hin zu reduzieren. Dies wiederum ergibt eine Zunahme des Querschnittes der Spreizhülse, welche insbesondere dann von grosser Wichtigkeit ist, wenn die Spreizhülse beispielsweise mit einem Innengewinde versehen wird. Durch eine entsprechende Gestaltung der Ausnehmung, beispielsweise durch Rundungsradien in den Ecken der Ausnehmung können Kerbwirkungen weitgehend vermieden werden.

Zum Spreizen des Dübels mit dem zuvor erfolgenden Zerstören des Solltrennsteges muss das Spreizelement gegenüber der Spreizhülse axial verschoben werden. Dies kann beispielsweise durch Aufbringen einer Zugbelastung an der Spreizhülse erfolgen. Damit eine Relativverschiebung zustande kommt, muss das Spreizelement die Spreizhülse radial überragen und sich widerhakenartig an der Bohrlochwandung abstützen, was infolge der Bohrlochholeranzen unsicher sein kann. Für ein einfaches Spreizen des Dübels ist es daher vorteilhaft, den Trennsteg als in die lichte Weite ragende Anschlagnase auszubilden. Das Spreizen des Dübels erfolgt in diesem Fall durch ein dorn- oder stiftartiges Setzwerkzeug, das in die Spreizhülse eingeführt wird und an der Anschlagnase zur Anlage kommt. Beim Aufbringen einer in axialer Richtung wirkenden Kraft, beispielsweise mittels Schlägen, die manuell oder durch Arbeitsgeräte wie Bohrhämmer oder dergleichen erzeugt werden können, auf das Setzwerkzeug wird sodann der Trennsteg zerstört und anschliessend das Spreizelement unter radialem Aufweiten der Spreizhülse in Setzrichtung verschoben.

Die Erfindung soll nachstehend anhand der sie beispielsweise wiedergebenden Zeichnungen näher erläutert werden. Es zeigen:

Fig. 1  einen erfindungsgemässen Spreizdübel, in Ansicht;

Fig. 2  ein Querschnitt durch den Dübel gemäss Fig. 1, entlang der Linie II - II;

Fig. 3  einen Längsschnitt des Dübels gemäss Fig. 1 und 2;

Fig. 4  eine Abwicklung des Dübels gemäss den Fig. 1 bis 3;

Fig. 5  eine weitere Ausführung eines erfindungsgemässen Spreizdübels, in Ansicht;

Fig. 6  einen Querschnitt durch den Dübel gemäss Fig. 5, entlang der Linie VI - VI;

Fig. 7  einen Längsschnitt durch den Dübel gemäss Fig. 5;

Fig. 8  eine Abwicklung des Dübels gemäss den Fig. 5 bis 7.

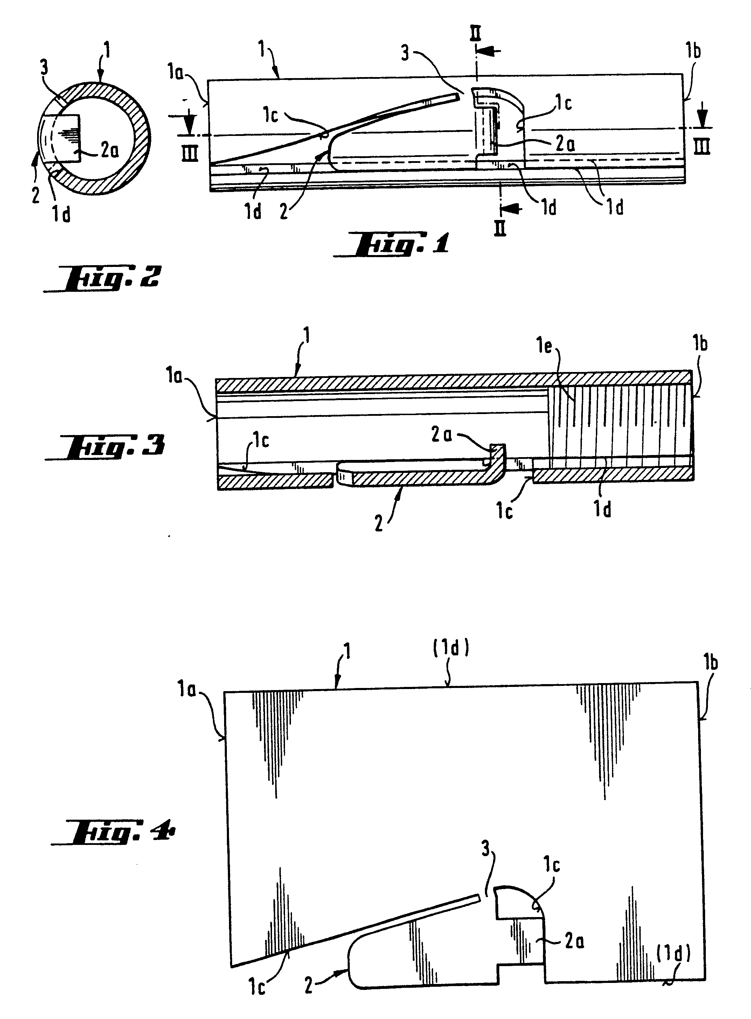

Der aus den Fig. 1 bis 4 ersichtliche Spreizdübel besteht aus einer insgesamt mit 1 bezeichneren Spreizhülse und einem insgesamt mit 2 bezeichneten Spreizelement. Die Spreizhülse 1 weist ein vorderes Ende 1a und ein rückwärtiges Ende 1b auf. Die Spreizhülse ist ferner mit einer sich zum vorderen Ende 1a hin verengenden Ausnehmung 1c versehen. Da die Spreizhülse 1 aus einem Blechstreifen gewickelt ist, weist sie in dem an das rückwärtige Ende 1b anschliessenden Bereich einen Längsschlitz 1d auf. Um ein Aufweiten der Spreizhülse 1 in diesem Bereich zu vermeiden, können die beim Längsschlitz 1d aneinanderstossenden Stirnkanten beispielsweise durch Löten oder Schweissen miteinander verbunden werden. Das Spreizelement 2 ist der Ausnehmung 1c entsprechend keilförmig verjüngt ausgebildet und stützt sich am fertigen Dübel seitlich an den Flanken der Ausnehmung 1c ab. Das Spreizelement 2 ist durch einen zerstörbaren Trennsteg 3 mit der Spreizhülse 1 einstückig verbunden. Wie insbesondere Fig. 4 zeigt, können das Spreizelement 2 und die Spreizhülse 1 somit im gleichen Arbeitsgang hergestellt werden. Zum Zerstören des Trennsteges 3 bzw. zum axialen Verschieben des Spreizelementes 2 in eine Spreizposition mittels eines nicht dargestellten Spreizwerkzeuges ist das Spreizelement 2 ferner mit einer in die lichte Weite der Spreizhülse 1 ragenden Anschlagnase 2a versehen. Als Anschlussmittel weist die Spreizhülse 1 in ihrem rückwärtigen Bereich ein Innengewinde 1e auf.

Die aus den Fig. 5 bis 8 ersichtliche Ausführung eines erfindungsgemässen Spreizdübels besteht aus einer insgesamt mit 11 bezeichneten Spreizhülse und einem insgesamt mit 12 bezeichneten Spreizelement. Im Unterschied zu der in den Fig. 1 bis 4 dargestellten Ausführung ist das Spreizelement 12 symmetrisch ausgebildet. Ein das Spreizelement 12 mit der Spreizhülse 11 verbindender Trennsteg 13 ist an der rückwärtigen Stirnseite des Spreizelementes 12 angeordnet und erstreckt sich in Umfangsrichtung. Herstellungsbedingt weist die Spreizhülse 11 ebenfalls einen Längsschlitz 11d auf. Ferner ist auch die Spreizhülse 11 mit einem Innengewinde 11e versehen. Die Abmessung "b" der den Trennsteg 13 aufweisenden rückwärtigen Stirnseite des Spreizelementes 12 in Umfangsrichtung ist geringer als die sich in axialem Abstand am rückwärtigen Ende der keilförmigen Verjüngung befindliche Abmessung "B" in Umfangsrichtung. Das Spreizelement 12 ist somit zum vorderen Ende 11a und zum rückwärtigen Ende 11b der Spreizhülse 11 hin keilförmig verjüngt ausgebildet. Durch entsprechende Gestaltung der Ausnehmung 11c befindet sich somit die stärkste Querschnittsschwächung nicht am rückwärtigen Ende der Ausnehmung 11c. Dadurch wird verhindert, dass der durch das Innengewinde 11e geschwächte Bereich der Spreizhülse 11 bei axialer Belastung an dieser Stelle abreissen kann. Das Spreizelement 12 ist in seinem rückwärtigen Ende mit einer den Trennsteg 13 bildenden Einprägung versehen.

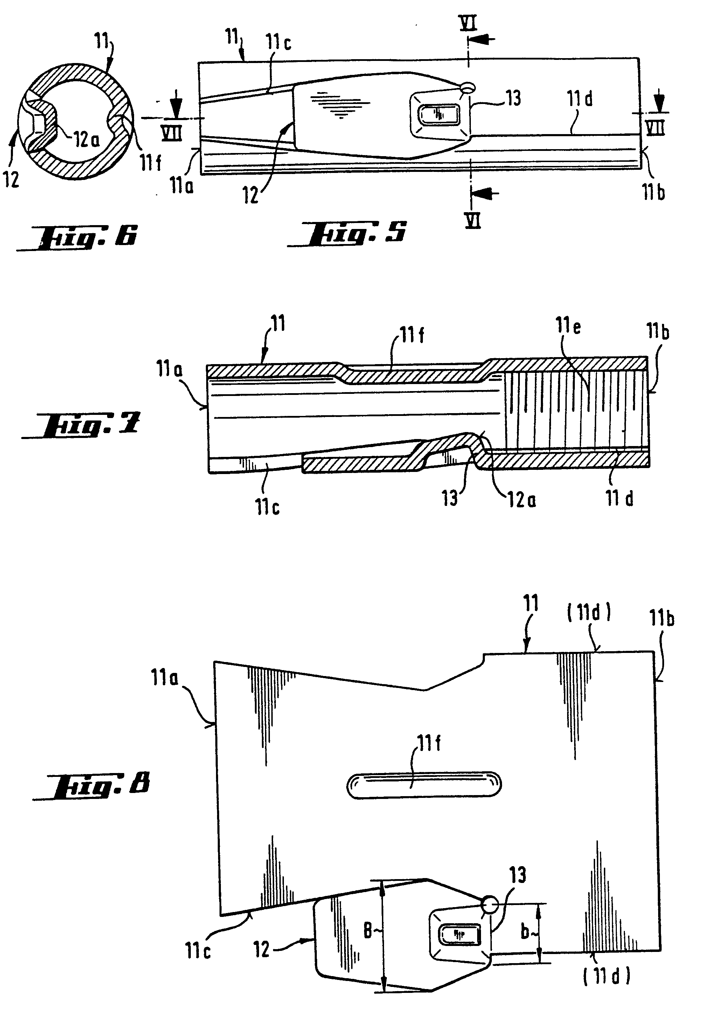

Wie insbesondere Fig. 7 zeigt, besteht der Trennsteg 13 aus einer örtlichen Materialschwächung. Der Trennsteg 13 ist jedoch gleichzeitig auch als in die lichte Weite der Spreizhülse 11 ragende Anschlagnase 12a des Spreizelementes 12 ausgebildet. Zum Spreizen des Dübels bzw. zum Zerstören des Trennsteges 13 wird ein stiftförmiges Spreizwerkzeug in die Bohrung der Spreizhülse 11 eingeführt, bis es an der Anschlagnase 12a zur Anlage kommt. Zur besseren Führung des Spreizwerkzeuges ist die Spreizhülse 11 auf der der Ausnehmung 11c gegenüberliegenden Seite mit einer in Längsrichtuhg verlaufenden Sicke 11f versehen. Nach dem Zerstören des Trennsteges 13 wird das Spreizelement 12 durch Einwirkung von Schlägen oder axialem Druck unter radialer Aufweitung der Spreizhülse 11 gegen deren vorderes Ende 11a verschoben. Dabei wird das Spreizelement 12 durch die Flanken der Ausnehmung 11c radial nach aussen gegen die Bohrlochwandung gepresst. Bei axialer Belastung der Spreizhülse 11 tritt ein Nachspreizverhalten auf.

**Patentansprüche**

1. Spreizdübel mit zylindrischer, aus einem Blechstreifen gewickelter Spreizhülse (1, 11), die an ihrem rückwärtigen Endbereich mit Mitteln zur Lastaufnahme versehen ist und der Mantel der Spreizhülse (1, 11) wenigstens einen in Dübellängsrichtung verlaufenden, sich zum vorderen Ende hin verengenden Längsschlitz (1c, 1d, 11d) für ein entsprechend keilförmig verjüngt ausgebildetes Spreizelement (2, 12) aufweist, das sich seitlich an den Flanken des Längsschlitzes (1c, 1d, 11d) abstützt und eine in das Innere der Spreizhülse (1, 11) ragende Anschlagnase (2a, 12a) aufweist, dadurch gekennzeichnet, dass das Spreizelement (2, 12) aus dem Blechstreifen einstückig mit dem Mantel der Spreizhülse (1, 11) geformt und über einen als Solltrennstelle ausgebildeten Trennsteg (3, 13) mit dem Mantel verbunden ist.

2. Spreizdübel nach Anspruch 1, dadurch gekennzeichnet, dass der Trennsteg (3) im Bereich der Flanken des Längsschlitzes (1c) angeordnet ist.

3. Spreizdübel nach Anspruch 1, dadurch gekennzeichnet, dass der Trennsteg (13) im rückwärtigen Stirnbereich des Spreizelementes (12) angeordnet ist.

4. Spreizdübel nach Anspruch 3, dadurch gekennzeichnet, dass sich der Trennsteg (13) in Umfangsrichtung entlang der rückwärtigen Stirnseite des Spreizelementes (12) erstreckt.

5. Spreizdübel nach Anspruch 4, dadurch gekennzeichnet, dass die Abmessung (b) der den Trennsteg (13) aufweisenden rückwärtigen Stirnseite des Spreizelementes (12) in Umfangsrichtung geringer ist als die sich in axialem Abstand am rückwärtigen Ende der keilförmigen Verjüngung befindliche Abmessung (B) in Umfangsrichtung.

6. Spreizdübel nach einem der Ansprüche 1 bis 5, dadurch gekennzeichnet, dass der Trennsteg (13) als in die lichte Weite ragende Anschlagnase (12a) ausgebildet ist.

**Claims**

1. An expansible dowel having a cylindrical expansible sleeve (1, 11) which is wound from a sheet-metal strip and which is provided at its rearward end region with means for the load reception and the jacket of the expansible sleeve (1, 11) having at least one longitudinal slot (1c, 1d, 11d), extending in the longitudinal direction of the dowel and tapering towards the front end, for an expansion element (2, 12) which is designed in a correspondingly tapered wedge-shaped manner and which is supported laterally against the flanks of the longitudinal slot (1c, 1d, 11d) and has a stop nose (2a, 12a) projecting into the interior of the expansible sleeve (1, 11), characterised in that the expansion element (2, 12) is shaped from the sheet-metal strip in one piece with the jacket of the expansible sleeve (1, 11) and is connected to the jacket by way of a separating web (3, 13) which is designed as a predetermined point of separation.

2. An expansible dowel according to claim 1, characterised in that the separating web (3) is arranged in the region of the flanks of the longitudinal slot (1c).

3. An expansible dowel according to claim 1, characterised in that the separating web (13) is arranged in the rearward end region of the expansion element (12).

4. An expansible dowel according to claim 3, characterised in that the separating web (13) extends in the circumferential direction along the rearward end face of the expansion element (12).

5. An expansible dowel according to claim 4, characterised in that the dimension (b), in the circumferential direction of the rearward end face of the expansion element, having the separating web (13), is less than the dimension (B), present at an axial spacing and in the circumferential direction of the rearward end of the wedge-shaped narrowing.

6. An expansible dowel according to one of claims 1 to 5, characterised in that the separating web (13) is designed as a stop nose (12a) which projects into the clear width.

## Revendications

1. Cheville à expansion avec douille d'expansion (1, 11) cylindrique roulée à partir d'une bande de tôle et munie, dans sa section terminale arrière, de moyens pour l'application de la charge, l'enveloppe de la douille d'expansion (1, 11) présentant au moins une fente longitudinale (1c, 1d, 11d) , orientée dans le sens longitudinal de la cheville et se rétrécissant en direction de l'extrémité antérieure, pour un élément d'écartement (2, 12) avec un rétrécissement en forme de coin analogue qui prend latéralement appui sur les flancs de la fente longitudinale (1c, 1d, 11d) et comprend une came de butée (2a, 12a) dépassant vers l'intérieur de la douille d'expansion (1, 11), <u>caractérisée en ce que</u>, à partir de la bande de tôle, l'élément d'écartement (2, 12) est réalisé en une seule pièce avec l'enveloppe de la douille d'expansion (1, 11) et relié à l'enveloppe par l'intermédiaire d'une barrette de rupture (3, 13) conformée en point de rupture imposée.

2. Cheville à expansion selon la revendication 1, caractérisée en ce que la barrette de rupture (3) est disposée dans la région des flancs de la fente longitudinale (1c).

3. Cheville à expansion selon la revendication 1, caractérisée en ce que la barrette de rupture (13) est disposée dans la région frontale postérieure de l'élément d'écartement (12).

4. Cheville à expansion selon la revendication 3, caractérisée en ce que la barrette de rupture (13) s'étend, dans le sens circonférentiel, le long de la face frontale postérieure de l'élément d'écartement (12).

5. Cheville à expansion selon la revendication 4, caractérisée en ce que, dans le sens circonférentiel, la cote (b) de la face frontale de l'élément d'écartement (12) comprenant la barrette de rupture (13) est plus petite que la cote (B) située, dans le sens circonférentiel, à distance axiale, à l'extrémité postérieure du rétrécissement en forme de coin.

6. Cheville à expansion selon l'une quelconque des revendications 1 à 5, caractérisée en ce que la barrette de rupture (13) est conformée en came de butée (12a) dépassant dans le diamètre intérieur.

Fig. 1

Fig. 2

Fig. 3

Fig. 4

_Fig. 6_

_Fig. 5_

_Fig. 7_

_Fig. 8_